# EUROPÄISCHE PATENTANMELDUNG

(11) **EP 4 850 895 A1**
(43) Veröffentlichungstag der Anmeldung: **09.12.2026**
(21) Anmeldenummer: 26180409.0
(22) Anmeldetag: 21.05.2026
(51) Int. Cl.: B29C 65/08, B29C 65/74

(54) **ROLLSONOTRODE MIT DICKENVARIIERTEN BEREICHEN FÜR EINE ULTRASCHALLSCHWEISSANLAGE**

(30) Priorität: 05.06.2025 DE 102025122138
(71) Anmelder: MS Ultraschall Technologie GmbH, 78549 Spaichingen (DE)
(72) Erfinder: STROPPEL, Jan, 72488 Sigmaringen (DE)
(74) Vertreter: Qip Patent & Recht Dr. Kuehn & Partner mbB

(57) **Zusammenfassung**

Es wird eine Rollsonotrode (3) für eine Ultraschallschweißanlage (1) beschrieben. Die Rollsonotrode weist einen kreiszylinderförmigen Sonotrodenkörper (15) mit einer kreiszylindrischen Umfangsfläche (17) und zwei entgegengesetzten kreisringförmigen Stirnflächen (19, 21) auf. Der Sonotrodenkörper weist zumindest einen dickenvariierten Bereich (23) auf, der bezogen auf eine der Stirnflächen (19, 21) in einem Kreissektor (25) in einem radialen Abstand (Aᵣ) zu einer axialen Mittelachse (29) des Sonotrodenkörpers (15) angeordnet ist und innerhalb dessen eine Dicke des Sonotrodenkörpers (15) in axialer Richtung von einer Dicke des Sonotrodenkörpers (15) in axialer Richtung in einem in Umfangsrichtung angrenzenden Kreissektor (25) beim gleichen radialen Abstand (Aᵣ) zu der axialen Mittelachse (29) um einen Dickenunterschied (ΔD) verschieden ist.

Das Vorsehen dickenvariierter Bereiche (23) kann zur Unterdrückung unerwünschter Schwingungsmodi beispielsweise einer Dreiecksschwingung beitragen.

## Beschreibung

### GEBIET DER ERFINDUNG

Die vorliegende Erfindung betrifft eine Rollsonotrode für eine Ultraschallschweißanlage sowie ein Verfahren zu deren Fertigung.

### HINTERGRUND DER ERFINDUNG

Dünne Materialbahnen wie beispielsweise Vlieslagen können miteinander durch Ultraschallschweißen mittels einer Ultraschallschweißanlage verbunden werden. Hierzu können miteinander zu verbindende Vlieslagen als Schweißpartner zwischen einer drehend bewegten Rollsonotrode und einem Gegenlagerelement wie beispielsweise einer Walze hindurch bewegt werden und dabei Ultraschallschwingungen in der Rollsonotrode induziert werden. Die Rollsonotrode weist hierbei eine kreiszylindrische Außenumfangsfläche auf, mit der sie an einer der Materialbahnen anliegt. Die Ultraschallschwingungen werden dabei mit Frequenzen von beispielsweise zwischen 20 kHz und 50 kHz, meist zwischen 30 kHz und 40 kHz, als Radialschwingungen an der Rollsonotrode generiert. Energie, die aufgrund der in Ultraschallschwingungen versetzten Rollsonotrode auf die Schweißpartner übertragen wird, führt dann zu einer stoffschlüssigen Verschweißung derselben.

Mögliche Eigenschaften von Ultraschallschweißanlagen und darin eingesetzten Rollsonotrode werden unter anderem beschrieben in US 5,707,483 A, US 2006/0144906 A1, US 2010/0040903 Alund US 5,697,035.

Für optimale Schweißergebnisse wird angestrebt, die Ultraschallschwingungen in der Rollsonotrode derart als Radialschwingungen in Form einer stehenden Zylinderwelle zu induzieren, dass ein Schwingungsmaximum an der Außenumfangsfläche der Rollsonotrode auftritt. Dabei sollen die Ultraschallschwingungen möglichst derart in die Rollsonotrode eingekoppelt werden und sich innerhalb der Rollsonotrode ausbreiten, dass es zu gleichmäßig verteilten Radialschwingungen entlang der gesamten Außenumfangsfläche der Rollsonotrode kommt, d.h., alle Bereiche der Außenumfangsfläche sollen möglichst synchron und mit möglichst gleicher Amplitude in radialer Richtung schwingen und sich dabei die Außenumfangsfläche der Rollsonotrode gleichmäßig in allen Bereichen periodisch zwischen einem minimalen Außendurchmesser und einem maximalen Außendurchmesser hin und her bewegen. Eigenschaften der Rollsonotrode wie beispielsweise deren Form, deren Abmessungen und/oder deren Materialverteilung sind dabei möglichst derart angepasst, dass es bei einer Anregung mit einer Hauptfrequenz zu einer Resonanz bezüglich der auszubildenden Radialschwingungen kommt.

Allerdings kann es beispielsweise aufgrund von Materialinhomogenitäten und/oder Fertigungstoleranzen innerhalb der Rollsonotrode auch zu einer Ausbildung unerwünschter Schwingungszustände bei Nebenfrequenzen kommen. Insbesondere kann bei einer sogenannten Dreiecksfrequenz eine Schwingungsmode angeregt werden, bei der sich entlang der Außenumfangsfläche der Rollsonotrode eine stehende Welle mit sechs Schwingungsknoten und jeweils zwischen den Schwingungsknoten liegenden Schwingungsmaxima ergibt. Bei den sich hierbei einstellenden Ultraschallschwingungen schwingen benachbarte Schwingungsmaxima entgegengesetzt zueinander, sodass es zu einer Dreieckförmigen Deformation der Rollsonotrode kommt. Aufgrund solcher Deformationen kann sich ein Schweißergebnis entlang der Schweißpartner verschlechtern, insbesondere da die entlang der Schweißpartner rollende Rollsonotrode ungleichmäßig in Ultraschallschwingungen versetzt wird, sodass sich entlang einer Schweißnaht oder Schweißspur unterschiedlich stark verschweißte Teilbereiche ergeben können.

Mögliche Eigenschaften und Details zu derartigen Schwingungsmoden und insbesondere der mit der Dreiecksfrequenz angeregten Schwingungsmode sind beispielsweise beschrieben in WO 2004/060581 A1 sowie EP 3 104 983 B1.

In EP 3 104 983 B1 wird diesbezüglich ein Ansatz beschrieben, bei dem eine Sonotrode mit einem radförmigen Abschnitt an einer Hauptfläche mit einer nichtzentralen Aufdickung versehen ist. Die Aufdickung soll dabei mindestens 25 % einer Breite einer zylinderförmigen Siegelfläche breit sein und vorzugsweise rotationssymmetrisch zur Radachse ausgebildet sein. Hierdurch soll die Aufgabe gelöst werden, eine Sonotrode anzugeben, bei der die Dreiecksfrequenz sich deutlich von der Hauptfrequenz unterscheidet.

### ZUSAMMENFASSUNG DER ERFINDUNG UND VORTEILHAFTER AUSFÜHRUNGSFORMEN

Es kann ein Bedarf an einer alternativ ausgebildeten Rollsonotrode bestehen. Insbesondere kann ein Bedarf an einer Rollsonotrode bestehen, mithilfe derer Materiallagen mit hoher Qualität miteinander durch Ultraschallschweißen verbunden werden können. Weiter konkretisiert kann ein Bedarf an einer Rollsonotrode bestehen, bei der Schwingungsmodi, welche eine gleichmäßige Radialschwingung stören, vermieden oder zumindest auf ein tolerierbares Maß reduziert sind. Ferner kann ein Bedarf an einer Ultraschallschweißanlage mit einer solchen Rollsonotrode bestehen. Außerdem kann ein Bedarf an einem Verfahren zum Fertigen einer solchen Rollsonotrode bestehen.

Einem solchen Bedarf kann mit den Gegenständen gemäß einem der unabhängigen Ansprüche entsprochen werden. Vorteilhafte Ausführungsformen sind in den abhängigen Ansprüchen sowie der nachfolgenden Beschreibung definiert bzw. in den begleitenden Figuren dargestellt.

Gemäß einem ersten Aspekt der Erfindung wird eine Rollsonotrode für eine Ultraschallschweißanlage beschrieben. Die Rollsonotrode weist einen kreiszylinderförmigen Sonotrodenkörper mit einer kreiszylindrischen Umfangsfläche und zwei entgegengesetzten kreisringförmigen Stirnflächen auf. Der Sonotrodenkörper weist zumindest einen dickenvariierten Bereich auf, der bezogen auf eine der Stirnflächen in einem Kreissektor in einem radialen Abstand zu einer axialen Mittelachse des Sonotrodenkörpers angeordnet ist und innerhalb dessen eine Dicke des Sonotrodenkörpers in axialer Richtung von einer Dicke des Sonotrodenkörpers in axialer Richtung in einem in Umfangsrichtung angrenzenden Kreissektor beim gleichen radialen Abstand zu der axialen Mittelachse um einen Dickenunterschied verschieden ist.

Gemäß einem zweiten Aspekt der Erfindung wird eine Ultraschallschweißanlage beschrieben, welche eine Rollsonotrode gemäß einer Ausführungsform des ersten Aspekts der Erfindung aufweist.

Gemäß einem dritten Aspekt der Erfindung wird ein Verfahren zum Fertigen einer Rollsonotrode für eine Ultraschallschweißanlage beschrieben. Das Verfahren umfasst zumindest die folgenden Schritte, vorzugsweise in der angegebenen Reihenfolge:
Bereitstellen eines kreiszylinderförmigen Sonotrodenkörpers mit einer kreiszylindrischen Umfangsfläche und zwei entgegengesetzten kreisringförmigen Stirnflächen,
Ausbilden zumindest eines dickenvariierten Bereichs an dem Sonotrodenkörper, wobei der dickenvariierte Bereich bezogen auf eine der Stirnflächen in einem Kreissektor in einem radialen Abstand zu einer axialen Mittelachse des Sonotrodenkörpers angeordnet ist und innerhalb des dickenvariierten Bereichs eine Dicke des Sonotrodenkörpers in axialer Richtung sich von einer Dicke des Sonotrodenkörpers in axialer Richtung in einem in Umfangsrichtung angrenzenden Kreissektor beim gleichen radialen Abstand zu der axialen Mittelachse um einen Dickenunterschied verschieden ist.

Einleitend soll eine Grundidee zu Ausführungsformen der hierin beschriebenen Erfindung kurz erläutert werden, wobei diese Erläuterung als lediglich grob zusammenfassend und die Erfindung nicht einschränkend auszulegen ist:
Es wurde erkannt, dass die Tendenz von Rollsonotroden, in ihrem Sonotrodenkörper zusätzlich zu einer beabsichtigten Radialschwingung bei Anregung mit einer Ultraschall-Hauptfrequenz auch störende andersartige Schwingungsmodi bei Anregung mit einer oder mehreren Nebenfrequenzen wie beispielsweise Dreiecksfrequenzen auszubilden, durch gezieltes Formen bzw. Bearbeiten des Sonotrodenkörpers reduziert werden kann. Insbesondere wurde erkannt, dass dadurch, dass an einer oder vorzugsweise beiden Stirnflächen des Sonotrodenkörpers gezielt lokal wenigstens eine oder vorzugsweise mehrere Vertiefungen oder Aufdickungen ausgebildet werden, eine Amplitude und/oder Amplitudenverteilung solcher störender Schwingungsmodi beeinflusst werden kann. Aufgrund der Vertiefungen bzw. Verdickungen werden an dem Sonotrodenkörper dabei Bereiche gebildet, in denen eine Dicke des Sonotrodenkörpers, gemessen entlang der axialen Richtung desselben, im Fall von Vertiefungen lokal kleiner und im Fall von Verdickungen lokal größer ist als im Durchschnitt, wobei der Durchschnitt zu berechnen ist als eine entlang der gesamten kreisringförmigen Stirnfläche des Sonotrodenkörpers gemittelte Dicke, und insbesondere größer als in angrenzenden Bereichen. Solche Bereiche werden daher hierin als dickenvariierte Bereiche bezeichnet. Die Vertiefungen bzw. Aufdickungen sollen dabei nicht ringförmig umlaufend an der jeweiligen Stirnfläche ausgebildet werden, sondern nur begrenzt auf einen oder mehrere Kreissektoren bzw. Kreisringsektoren, sodass zwischen zwei in Umlaufrichtung benachbarten vertieften bzw. verdickten Bereichen jeweils ein Bereich ohne Vertiefung bzw. Verdickung verbleibt. Dabei wirken lokal vertiefte Bereiche im Allgemeinen als eine Schwingungsamplitude lokal senkend, wohingegen lokal verdickte Bereiche im Allgemeinen als eine Schwingungsamplitude lokal steigernd wirken.

Insbesondere wurde erkannt, dass es beim Fertigen von Rollsonotroden oft unvermeidlich zu einer nicht-optimalen Masseverteilung und/oder Formgebung an dem Sonotrodenkörper kommen kann, sodass der anfänglich als Kreiszylinder ausgebildete Sonotrodenkörper mehr oder weniger für eine Anregung zu unerwünschten Schwingungsmodi, beispielsweise durch Dreiecksfrequenzen, empfänglich sein kann. Es wird daher vorgeschlagen, einen anfänglich bereitgestellten kreiszylinderförmigen Sonotrodenkörper mit zunächst planen Stirnflächen und somit einheitlicher Dicke im Rahmen eines Fertigungsprozesses gezielt mit einem oder mehreren dickenvariierten Bereichen zu versehen. Hierzu werden an einer oder beiden seiner Stirnflächen lokal Vertiefungen oder Aufdickungen ausgebildet. Dabei kann es vorteilhaft sein, den Sonotrodenkörper hinsichtlich einer sich an ihm ausbildenden Amplitudenverteilung gezielt zu vermessen, um dann dort, wo besonders starke bzw. maximale Abweichungen der gemessenen Amplitude von Durchschnittswerten ermittelt wurden, gezielt lokal vertiefte oder verdickte Bereiche auszubilden.

Lokale Maxima in einer Amplitudenverteilung von störenden Schwingungsmodi wie insbesondere einer Dreiecksschwingung können dadurch reduziert werden, sodass der Sonotrodenkörper der Rollsonotrode insgesamt gleichmäßiger zu Radialschwingungen angeregt werden kann. Letztendlich lassen sich hierdurch Schweißeigenschaften, wie sie mit der Rollsonotrode erreichbar sind, verbessern.

Nachfolgend werden mögliche Ausgestaltungen und Vorteile von Ausführungsformen des hierin vorgestellten Ultraschallschweißverfahrens in genaueren Einzelheiten beschrieben.

Ultraschallschweißen wurde dazu entwickelt, um wenigstens zwei Fügepartner stoffschlüssig und mechanisch belastbar miteinander zu verbinden. Insbesondere wenn als Fügepartner Materialbahnen wie zum Beispiel Vlieslagen aus einem oder mehreren Polymermaterialien miteinander verschweißt werden sollen, werden auch Ultraschallschweißanlagen mit sogenannten Rollsonotroden eingesetzt. Eine Sonotrode ist generell ein Bauteil in einer Ultraschallschweißanlage, welches gezielt in Ultraschallschwingungen versetzt werden kann, um diese dann auf zumindest einen der Fügepartner zu applizieren. Eine Rollsonotrode weist hierbei eine rollenartige, radartige oder walzenartige Geometrie auf. Anders ausgedrückt verfügt die Rollsonotrode über einen kreiszylinderförmigen Sonotrodenkörper. Dieser weist eine kreiszylindrische Außenumfangsfläche sowie an seinen entgegengesetzten Enden jeweils kreisringförmige Stirnflächen auf. Typischerweise weist die Rollsonotrode ferner eine Welle auf, welche sich axial zentral durch den Sonotrodenkörper erstreckt und einseitig über eine oder beidseitig über beide entgegengesetzte Stirnflächen des Sonotrodenkörpers übersteht. Die Rollsonotrode ist dabei typischerweise an ihrer Welle rotierfähig gelagert. Dementsprechend kann die Rollsonotrode um ihre Welle bzw. eine von dieser definierte Rotationsachse gedreht werden und dabei mit ihrer Außenumfangsfläche entlang einer Schweißebene abrollen. In dieser Schweißebene werden typischerweise die Fügepartner, das heißt beispielsweise eben ausgebreitete Vlieslagen, zugeführt und zwischen der in Ultraschallschwingungen versetzten Rollsonotrode und einem beispielsweise walzenförmigen Gegenlager hindurchgeführt. Eine durch die Ultraschallschwingungen von der Rollsonotrode auf die Fügepartner übertragene Energie führt dann zum stoffschlüssigen Verschweißen der Fügepartner.

Die Rollsonotrode soll dabei vorzugsweise in eine reine Radialschwingung versetzt werden, das heißt, die Umfangsfläche des Sonotrodenkörpers sollte möglichst überall synchron und mit gleicher Schwingungsamplitude schwingen. In diesem Fall kann durch die Ultraschallschwingungen an der Rollsonotrode Energie gleichmäßig entlang der gesamten Breite der Rollsonotrode sowie entlang einer gesamten Spur, mit der die Rollsonotrode an den Fügepartnern entlang rollt auf die Fügepartner übertragen werden. Dadurch kann eine gleichmäßige Verschweißung und somit ein qualitativ hochwertiges Schweißergebnis erreicht werden.

Unerwünschte Schwingungsmodi, welche keine reine Radialschwingung darstellen, können jedoch das Schweißergebnis beeinträchtigen. Insbesondere können Schwingungsmodi, bei denen einzelne Teilbereiche der Umfangsfläche des Sonotrodenkörpers asynchron und/oder mit anderer Amplitude als benachbarte Teilbereiche schwingen, dazu führen, dass die mit der Rollsonotrode erzeugten Verschweißungen entlang ihrer Längserstreckung keine gleichmäßige Qualität aufweisen. Dies trifft insbesondere für die bereits eingangs genannten Dreiecksschwingungen, das heißt bei einer Anregung einer Dreiecksfrequenz, zu. Unerwünschte Schwingmoden können auch zur Zerstörung der Sonotrode führen.

Es wurde nun in nicht naheliegender Weise erkannt, dass eine Ausbildung unerwünschter Schwingungsmodi innerhalb einer Rollsonotrode dadurch in vorteilhafter Weise beeinflusst werden kann, dass an dem Sonotrodenkörper dickenvariierte Bereiche vorgesehen werden. Insbesondere wurde erkannt, dass durch eine gezielte Ausgestaltung solcher dickenvariierter Bereiche hinsichtlich ihrer Positionierung an dem Sonotrodenkörper und/oder hinsichtlich einer Geometrie, mit der die dickenvariierten Bereiche ausgebildet werden, eine Tendenz, dass sich in dem Sonotrodenkörper störende Schwingungsmodi einstellen können, erheblich vermindert werden kann.

Ein dickenvariierter Bereich ist hierbei ein Teilbereich des Sonotrodenkörpers, in dem dieser lokal eine andere Dicke aufweist, als in angrenzenden Teilbereichen und insbesondere als im Durchschnitt über den gesamten Sonotrodenkörper hin. Die Dicke kann dabei um einen Dickenunterschied kleiner oder größer als in den angrenzenden Teilbereichen bzw. als der Durchschnitt sein. Der Dickenunterschied kann dabei entlang des gesamten dickenvariierten Bereichs gleich sein, d.h. der dickenvariierte Bereich kann überall eine gleiche Tiefe bzw. Höhe aufweisen. Alternativ kann der Dickenunterschied entlang des dickenvariierten Bereichs variieren, wobei als Dickenunterschied für den gesamten dickenvariierten Bereich ein Mittelwert angenommen werden kann.

Dabei erstreckt sich ein dickenvariierter Bereich jedoch lediglich in einem begrenzten Kreissektor an dem Sonotrodenkörper. Der dickenvariierte Bereich erstreckt sich dabei innerhalb des jeweiligen Kreissektors in einem bestimmten radialen Abstand bzw. flächig innerhalb bestimmter radialer Abstandsgrenzen. Anders ausgedrückt ist der dickenvariierte Bereich innerhalb des Kreissektors in einem vorgegebenen Abstand von der axialen Mittelachse des Sonotrodenkörpers angeordnet. Da der dickenvariierte Bereich selbst stets eine gewisse Flächenausdehnung aufweist, ist der radiale Abstand hierbei derart zu verstehen, dass sich der dickenvariierte Bereich innerhalb des Kreissektors zwischen einem minimalen radialen Abstand und einem maximalen radialen Abstand von der axialen Mittelachse des Sonotrodenkörpers erstreckt.

Der Kreissektor ist hierbei als bezogen auf eine der Stirnflächen des Sonotrodenkörpers anzunehmen. Die gesamte Stirnfläche ist dabei als in mehrere Kreissektoren unterteilt anzunehmen. An einen Kreissektor, in dem ein dickenvariierter Bereich ausgebildet ist, grenzt somit in Umlaufrichtung jeweils zumindest ein benachbarter Kreissektor an, in dem kein solcher dickenvariierter Bereich angeordnet ist oder in dem zumindest kein dickenvariierter Bereich mit gleichem Dickenunterschied im gleichen radialen Abstand zur axialen Mittelachse des Sonotrodenkörpers ausgebildet ist.

Mit anderen Worten soll sich der dickenvariierte Bereich an der Stirnfläche des Sonotrodenkörpers nicht ringförmig umlaufend um die axiale Mittelachse erstrecken und dabei überall einen gleichen Dickenunterschied aufweisen. Stattdessen soll ein dickenvariierter Bereich jeweils begrenzt auf einen Kreissektor ausgebildet werden und in einem daran angrenzenden Kreissektor soll kein dickenvariierter Bereich oder allenfalls ein dickenvariierter Bereich, der sich hinsichtlich des Dickenunterschieds und/oder hinsichtlich seines radialen Abstands zur axialen Mittelachse unterscheidet, ausgebildet sein.

Bei dem Sonotrodenkörper, der derart mit einem oder vorzugsweise mehreren dickenvariierten Bereichen ausgebildet ist, grenzt somit beim Umlaufen um die axiale Mittelachse in einem radialen Abstand jeweils ein dickenvariierter Bereich in einem Kreissektor an einen in seiner Dicke nicht oder anders variierten Bereich in einem angrenzenden Kreissektor.

Eine Positionierung und/oder geometrische Ausgestaltung des einen oder der mehreren dickenvariierten Bereiche kann dabei gezielt derart vorgegeben werden, dass diese eine Reduzierung einer Tendenz zum Ausbilden unerwünschter Schwingungsmodi an den Sonotrodenkörper bewirken.

Insbesondere kann gemäß einer Ausführungsform das zum Fertigen der Rollsonotrode einzusetzende Verfahren ferner einen Schritt des Ermittelns einer Amplitudenverteilung einer in dem Sonotrodenkörper angeregten Ultraschallschwingung entlang der Umfangsfläche des Sonotrodenkörpers aufweisen. Dabei wird der mindestens eine dickenvariierte Bereich an einer Position ausgebildet, an der eine an der Position ermittelte Amplitude sich maximal von einer durchschnittlichen Amplitude der angeregten Ultraschallschwingung entlang der Umfangsfläche des Sonotrodenkörpers unterscheidet.

Anders ausgedrückt kann die Rollsonotrode anfänglich mit einem kreiszylinderförmigen Sonotrodenkörper gefertigt werden, dessen beide entgegengesetzten kreisringförmigen Stirnflächen zunächst eben sind. Allerdings weist ein solcher Sonotrodenkörper im Regelfall keine perfekt kreiszylinderförmige Geometrie auf, beispielsweise aufgrund von Fertigungstoleranzen, und/oder eine Masseverteilung innerhalb des Sonotrodenkörpers kann Inhomogenitäten aufweisen beispielsweise aufgrund von Materialinhomogenitäten. Auch Schwankungen im E-Modul oder der Schallgeschwindigkeit in verschiedenen Teilvolumina des Sonotrodenkörpers können Ultraschallschwingung beeinflussen. Solche Schwankungen bzw. Abweichungen von einem ideal kreiszylinderförmigen Körper bzw. ideal homogenen Masse-, E-Modul- und/oder Schallgeschwindigkeitsverteilungen können die Ausbildung unerwünschter Schwingungsmodi bei einer Anregung mit Ultraschallschwingungen begünstigen

Um eine Art und/oder ein Ausmaß solcher Schwingungsmodi erkennen und möglichst quantifizieren zu können, kann daher der anfänglich bereitgestellte Sonotrodenkörper gezielt mit Ultraschallschwingungen angeregt und dabei eine Amplitudenverteilung entlang seiner Umfangsfläche ermittelt werden. Die Amplitudenverteilung kann hierbei durch Messen der an unterschiedlichen Positionen entlang der Umfangsfläche auftretenden Schwingungsamplituden ermittelt werden. Alternativ ist vorstellbar, die Amplitudenverteilung nicht direkt zu messen, sondern durch ein Ableiten aus anderen messbaren physikalischen Eigenschaften des Sonotrodenkörpers zu ermitteln. Beispielsweise können Materialinhomogenitäten, wie sie an oder in dem Sonotrodenkörper existieren, gemessen werden, beispielsweise durch zerstörungsfreie Materialuntersuchung, und aus den Messergebnissen kann dann durch Berechnungen, Simulationen, o.ä. auf die zu ermittelnde Amplitudenverteilung rückgeschlossen werden. Die ermittelte Amplitudenverteilung gibt dabei an, welche Schwingungsamplituden durch die Anregung mit der Ultraschallschwingung in verschiedenen Teilbereichen entlang der Umfangsfläche des Sonotrodenkörpers bewirkt werden. Die Amplitudenverteilung kann hierbei sowohl in einer Umlaufrichtung um die Umfangsfläche als auch in einer axialen Richtung entlang der Umfangsfläche positionsspezifisch aufgelöst werden.

Dabei erhaltene Informationen können dann genutzt werden, um einen oder mehrere dickenvariierte Bereiche speziell an einer bzw. mehreren Positionen auszubilden, an denen beim Ermitteln der Amplitudenverteilung eine Amplitude erkannt wurde, die sich besonders stark von einer durchschnittlichen Amplitude in benachbarten Teilbereichen entlang der Umfangsfläche des Sonotrodenkörpers unterscheidet. Anders ausgedrückt sollen die dickenvariierten Bereiche möglichst gerade dort an dem Sonotrodenkörper ausgebildet werden, wo bei dem anfänglich unbearbeiteten Sonotrodenkörper besonders hohe Einflüsse durch unerwünschte Schwingungsmodi erkannt wurden.

Gemäß einer Ausführungsform ist der zumindest eine dickenvariierte Bereich mittels eines lokal vertieften Bereichs gebildet, der durch eine Ausnehmung in Axialrichtung an zumindest einer der Stirnflächen ausgebildet ist. Alternativ kann der zumindest eine dickenvariierte Bereich mittels eines lokal verdickten Bereichs gebildet sein, der durch eine Verdickung in Axialrichtung an zumindest einer der Stirnflächen ausgebildet ist.

Anders ausgedrückt kann ein dickenvariierter Bereich dadurch gebildet werden, dass an einer Stirnfläche des Sonotrodenkörpers gezielt ein lokal vertiefter Bereich gebildet wird, sodass die Dicke des Sonotrodenkörpers dort lokal geringer ist als in einem angrenzenden Bereich. So kann beispielsweise durch lokales Abtragen wie beispielsweise durch Ausfräsen von Material eine Ausnehmung an der Stirnfläche des Sonotrodenkörpers erzeugt werden, welche sich in Axialrichtung in den Sonotrodenkörper hinein erstreckt. Eine solche Ausnehmung bzw. ein solcher vertiefter Bereich kann auch als Tasche bezeichnet werden.

Dabei wurde erkannt, dass ein lokal vertiefter dickenvariierter Bereich tendenziell dazu führt, dass eine Schwingungsamplitude unerwünschter Schwingungsmodi in einem daran angrenzenden Teilbereich der Umfangsfläche des Sonotrodenkörpers verringert wird. Lokal vertiefte dickenvariierte Bereiche werden daher vorzugsweise an oder nahe denjenigen Bereichen des Sonotrodenkörpers erzeugt, an denen beim Ermitteln der Amplitudenverteilung zuvor außerordentlich hohe Amplituden von unerwünschten Schwingungsmodi erkannt wurden, um diese dadurch zu senken.

Alternativ oder ergänzend kann ein dickenvariierter Bereich dadurch gebildet werden, dass an der Stirnfläche des Sonotrodenkörpers gezielt ein lokal verdickter Bereich gebildet wird, sodass die Dicke des Sonotrodenkörpers dort lokal größer ist als in einem angrenzenden Bereich. Beispielsweise kann durch lokales Aufbringen oder Abscheiden von Material eine Verdickung an der Stirnfläche des Sonotrodenkörpers erzeugt werden, welche in Axialrichtung von einer der Stirnflächen des Sonotrodenkörpers abragt.

Dabei wurde erkannt, dass ein lokal verdickter dickenvariierter Bereich tendenziell dazu führt, dass eine Schwingungsamplitude unerwünschter Schwingungsmodi in einem daran angrenzenden Teilbereich der Umfangsfläche des Sonotrodenkörpers vergrößert wird. Lokal verdickte dickenvariierte Bereiche werden daher vorzugsweise an oder nahe denjenigen Bereichen des Sonotrodenkörpers erzeugt, an denen beim Ermitteln der Amplitudenverteilung zuvor besonders geringe Amplituden von unerwünschten Schwingungsmodi erkannt wurden, um diese lokal zu stärken und damit eine räumliche Verteilung der Schwingungsmodi zu homogenisieren.

Gemäß einer Ausführungsform werden an beiden Stirnflächen jeweils mindestens eine Ausnehmung und/oder jeweils mindestens eine Verdickung ausgebildet.

Anders ausgedrückt werden, obwohl es prinzipiell auch möglich ist, lediglich an einer der Stirnflächen eine oder mehrere Ausnehmungen oder Verdickungen auszubilden, vorzugsweise an beiden entgegengesetzten Stirnflächen eine oder mehrere Ausnehmungen oder Verdickungen ausgebildet.

Dabei kann es bevorzugt sein, einen dickenvariierten Bereich dadurch zu erzeugen, dass an beiden Stirnflächen jeweils Ausnehmungen erzeugt werden, sodass sich die Dicke des dickenvariierten Bereichs reduziert, oder dass an beiden Stirnflächen jeweils Verdickungen erzeugt werden, sodass sich die Dicke des dickenvariierten Bereichs erhöht. Prinzipiell ist auch vorstellbar, an einer der Stirnflächen eine Ausnehmung und an der anderen eine Verdickung auszubilden.

Indem eine oder mehrere Ausnehmungen bzw. eine oder mehrere Verdickungen an beiden Stirnflächen des Sonotrodenkörpers vorgesehen werden, können unerwünschte Schwingungsmodi möglichst gleichmäßig nahe den beiden Stirnflächen beeinflusst werden. Außerdem können Rotationseigenschaften des Sonotrodenkörpers positiv beeinflusst werden.

Gemäß einer konkretisierten Ausführungsform sind die Ausnehmungen und/oder Verdickungen an den entgegengesetzten Stirnflächen in einander in Axialrichtung gesehen überlappenden Bereichen ausgebildet.

Mit anderen Worten können die Ausnehmungen bzw. Verdickungen an den entgegengesetzten Stirnflächen jeweils an einer gleichen Position bezogen auf eine Umlaufrichtung um die Rotationsachse angeordnet sein. Anders ausgedrückt kann dort, wo an einer der Stirnflächen eine Ausnehmung bzw. Verdickung ausgebildet ist, auch an der entgegengesetzten Stirnfläche jeweils eine Ausnehmung bzw. Verdickung ausgebildet sein, sodass sich die Tiefen der Ausnehmungen bzw. die Höhen der Verdickungen insgesamt zu dem Dickenunterschied des dadurch gebildeten dickenvariierten Bereichs summieren. Eine solche Ausgestaltung von dickenvariierten Bereichen kann bei der Reduzierung unerwünschter Schwingungsmodi unterstützen und/oder Rotationseigenschaften des Sonotrodenkörpers verbessern.

Gemäß einer Ausführungsform weist der Dickenunterschied höchstens 20%, vorzugsweise höchstens 15%, höchstens 10%, höchstens 7%, höchstens 5% oder höchstens 3%, und mindestens 0,2%, vorzugsweise mindestens 0,5% oder mindestens 1%, einer durchschnittlichen Dicke des Sonotrodenkörpers auf.

Mit anderen Worten kann eine Ausnehmung, mit der ein dickenvariierter Bereich gebildet wird, mit einer relativ geringen Tiefe erzeugt werden bzw. eine Aufdickung, mit der ein dickenvariierter Bereich gebildet wird, kann mit einer relativ geringen Höhe erzeugt werden. Ein Boden der Ausnehmung steht somit lediglich geringfügig hinter der sonstigen Oberfläche der Stirnfläche zurück bzw. eine Decke der Aufdickung springt lediglich geringfügig über die sonstige Oberfläche der Stirnfläche vor. Der dabei insgesamt gebildete Dickenunterschied zwischen dem dickenvariierten Bereich und einem angrenzenden Bereich in einem benachbarten Kreissektor ist dabei im Vergleich zur gesamten bzw. durchschnittlichen Dicke des Sonotrodenkörpers klein und beträgt typischerweise zwischen 1 % und 5 % dieser Dicke. Eine gesamte bzw. durchschnittliche Dicke des Sonotrodenkörpers beträgt hierbei bei Rollsonotroden mit typischen Abmessungen zumeist mindestens 10 mm, vorzugsweise mindestens 20 mm, mindestens 30 mm oder mindestens 40 mm, im Regelfall jedoch weniger als 100 mm oder meist weniger als 60 mm. Ein Durchmesser des Sonotrodenkörpers kann dabei typischerweise in einem Bereich von 50 - 200 mm, meist zwischen 90 und 130 mm, liegen. Es wurde erkannt, dass mithilfe von dickenvariierten Bereichen mit einem solchen Dickenunterschied besonders effizient Einfluss auf unerwünschte Schwingungsmodi genommen werden kann.

Insbesondere bezogen auf Rollsonotroden mit typischen Abmessungen kann somit gemäß einer Ausführungsform der Dickenunterschied höchstens 20 mm, vorzugsweise höchstens 15 mm, höchstens 10 mm, höchstens 5 mm, höchstens 2,5 mm, vorzugsweise weniger als 2 mm, weniger als 1,5 mm oder weniger als 1 mm, und mindestens 0,1 mm, vorzugsweise mehr als 0,2 mm, aufweisen.

Gemäß einer Ausführungsform weist der Sonotrodenkörper zumindest drei dickenvariierte Bereiche verteilt auf zumindest drei verschiedene Kreissektoren auf.

Es wurde erkannt, dass durch ein Ausbilden von zumindest drei auf unterschiedliche Kreissektoren verteilten dickenvariierten Bereiche ein störender Einfluss unerwünschter Schwingungsmodi auf ein gesamtes Schwingungsverhalten der Rollsonotrode erheblich reduziert werden kann. Dies trifft insbesondere für den durch eine Dreiecksfrequenz angeregten Schwingungsmode zu. Generell kann davon ausgegangen werden, dass eine Anzahl vorteilhaft auszubildender dickenvariierter Bereiche der Hälfte einer Anzahl von Schwingungsknoten, die bei einem damit zu reduzierenden Schwingungsmodus auftreten, entsprechen sollte. Bei einer Dreiecksschwingung mit sechs Schwingungsknoten sollten demnach vorzugsweise drei dickenvariierte Bereiche, bei einer Vierecksschwingung mit acht Schwingungsknoten sollten vorzugsweise vier dickenvariierte Bereiche, usw. ausgebildet werden

Gemäß einer konkretisierten Ausführungsform sind die dickenvariierten Bereiche in Umfangsrichtung äquidistant zueinander angeordnet.

Anders ausgedrückt sollten die dickenvariierten Bereiche in Kreissektoren ausgebildet werden, die in gleichen Winkeln zueinander versetzt sind. Ein Winkelversatz zwischen den Kreissektoren kann dabei 360°/n sein, wobei n die Anzahl zu bildender dickenvariierter Bereiche ist. Werden beispielsweise drei dickenvariierte Bereiche an dem Sonotrodenkörper ausgebildet, so sollten diese zueinander um jeweils 120° versetzt angeordnet sein. Durch eine derartige gleichmäßige Verteilung der dickenvariierten Bereiche kann eine effiziente Reduzierung von Störungen durch unerwünschte Schwingungsmodi erreicht werden.

Nach dem Ausbilden der dickenvariierten Bereiche in dem Sonotrodenkörper kann vorzugsweise erneut eine sich dann einstellende Amplitudenverteilung einer in dem Sonotrodenkörper angeregten Ultraschallschwingung entlang der Umfangsfläche des Sonotrodenkörpers ermittelt werden. Hierdurch kann eine Wirksamkeit der eingebrachten dickenvariierten Bereiche detektiert werden. Gegebenenfalls kann daraufhin einer oder mehrere der dickenvariierten Bereiche nachbearbeitet werden, beispielsweise weiter vertieft oder aufgedickt und/oder in seiner Fläche, insbesondere in seinem Flächengehalt und /oder in seiner Form, variiert werden, um damit eine weiter verbesserte Unterdrückung von unerwünschten Schwingungsmodi anzustreben.

Allerdings kann es hierbei passieren, dass die dickenvariierten Bereiche über eine Ausgestaltung, bei der sie maximal wirksam sind, hinaus vergrößert werden. In diesem Fall können sich die unterdrückenden Effekte auf die unerwünschten Schwingungsmodi wieder verringern.

Gemäß einer Ausführungsform wird insbesondere für eine solche Situation vorgeschlagen, dass beim Fertigen der Rollsonotrode an dem Sonotrodenkörper in einem ersten Fertigungsschritt zumindest ein dickenvariierter Bereich in einem Kreissektor ausgebildet wird, vorzugsweise werden zumindest drei dickenvariierte Bereiche verteilt auf zumindest drei verschiedene Kreissektoren ausgebildet. Anschließend wird eine Amplitudenverteilung einer in dem Sonotrodenkörper angeregten Ultraschallschwingung entlang der Umfangsfläche des Sonotrodenkörpers ermittelt. Nachfolgend wird in einem weiteren Fertigungsschritt abhängig von der ermittelten Amplitudenverteilung zumindest ein weiterer dickenvariierter Bereich in einem anderen Kreissektor ausgebildet, vorzugsweise werden zumindest drei weitere dickenvariierte Bereiche verteilt auf zumindest drei verschiedene andere Kreissektoren ausgebildet.

Anders ausgedrückt wird beim Fertigen der Rollsonotrode zunächst eine erste Anzahl von anfänglichen dickenvariierten Bereichen durch Ausbilden von Vertiefungen oder Verdickungen erzeugt, wobei die dickenvariierten Bereiche in voneinander verschiedenen Kreissektoren und vorzugsweise mit einem jeweils gleichen Winkelversatz zueinander angeordnet werden. Am Beispiel von drei auszubildenden dickenvariierten Bereichen bedeutet dies, dass diese beispielsweise an Winkelpositionen von 0°, 120° und 240° angeordnet werden. Die Winkelpositionen können hiermit jeweils auf eine geometrische Mitte des dickenvariierten Bereichs bezogen werden.

Anschließend kann bei dem derart bearbeiteten Sonotrodenkörper die sich einstellende Amplitudenverteilung bei Ultraschallanregung gemessen werden. Insbesondere wenn dabei erkannt wird, dass die Amplitudenverteilung entlang der Umfangsfläche immer noch erhebliche Ungleichmäßigkeiten aufweist, kann entschieden werden, den Sonotrodenkörper weiter zu bearbeiten. Je nach Art und Verteilung der Ungleichmäßigkeiten bei der Amplitudenverteilung kann dabei entschieden werden, die bereits erzeugten anfänglichen dickenvariierten Bereiche nachzubearbeiten, d.h. beispielsweise zu vertiefen und/oder flächenmäßig zu vergrößern.

Alternativ, insbesondere für den Fall, dass erkannt wird, dass durch ein beispielsweise mehrfaches Nachbearbeiten keine Verbesserungen sondern eher Verschlechterungen hinsichtlich der Amplitudenverteilung bewirkt werden, kann entschieden werden, dass ergänzend zu der ersten Anzahl von anfänglichen dickenvariierten Bereichen eine zweite Anzahl von weiteren dickenvariierten Bereichen erzeugt wird. Diese weiteren dickenvariierten Bereiche sollen dabei in einem bzw. mehreren anderen Kreissektoren, d.h. Kreissektoren, die sich von denjenigen für die anfänglichen dickenvariierten Bereiche unterscheiden, ausgebildet werden. Vorzugsweise werden die weiteren dickenvariierten Bereiche ebenfalls äquidistant zueinander, d.h. mit einem gleichen Winkelversatz relativ zueinander und vorzugsweise auch mit einem gleich bleibenden Winkelversatz in Bezug auf die anfänglichen dickenvariierten Bereiche, angeordnet. Am oben genannten Beispiel von drei anfänglichen dickenvariierten Bereichen und drei weiteren dickenvariierten Bereichen können letztere dann beispielsweise an Winkelpositionen von 60°, 180° und 300° angeordnet werden.

Die weiteren dickenvariierten Bereiche können dabei vom gleichen Typ sein wie die anfänglichen dickenvariierten Bereiche. D.h., wenn die anfänglichen dickenvariierten Bereiche beispielsweise als Vertiefungen ausgebildet sind, können auch die weiteren dickenvariierten Bereiche als Vertiefungen ausgestaltet sein. Alternativ können sowohl die anfänglichen als auch die weiteren dickenvariierten Bereiche als Verdickungen ausgestaltet sein. Prinzipiell ist jedoch auch vorstellbar, die anfänglichen und die weiteren dickenvariierten Bereiche von unterschiedlichen Typen, d.h. einmal als Vertiefungen und einmal als Verdickungen, auszugestalten.

Vorzugsweise unterscheiden sich dabei jedoch die anfänglichen und die weiteren dickenvariierten Bereiche hinsichtlich der in ihnen realisierten Dickenunterschiede. Insbesondere wurde als vorteilhaft erkannt, die anfänglichen dickenvariierten Bereiche mit einem größeren Dickenunterschied auszubilden als die weiteren dickenvariierten Bereiche. Dies kann beispielsweise dahingehend verstanden werden, dass mit den anfänglichen dickenvariierten Bereichen zunächst eine grobe Reduzierung von Inhomogenitäten der Amplitudenverteilung ausgeglichen werden soll und dann mit dem Einbringen der weiteren dickenvariierten Bereiche ergänzend eine feine weitere Reduzierung verbleibender Inhomogenitäten angestrebt wird.

Gemäß einer Ausführungsform weist die insgesamt gefertigte Rollsonotrode somit beispielsweise zumindest sechs dickenvariierte Bereiche verteilt auf zumindest sechs verschiedene Kreissektoren auf.

Gemäß einer konkretisierten Ausführungsform weisen die dickenvariierten Bereiche von in Umfangsrichtung zueinander nächstbenachbarten Kreissektoren voneinander verschiedene Dickenunterschiede auf.

Es wird darauf hingewiesen, dass mögliche Merkmale und Vorteile von verschiedenen Ausführungsformen der Erfindung hierin teilweise mit Bezug auf eine erfindungsgemäß ausgestaltete Rollsonotrode und teilweise mit Bezug auf ein Verfahren zu deren Fertigung beschrieben sind. Fachleute werden erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 veranschaulicht eine Ultraschallschweißanlage mit einer Rollsonotrode.
Fig. 2 zeigt eine perspektivische Ansicht einer Rollsonotrode gemäß einer Ausführungsform der vorliegenden Erfindung.
Fig. 3 zeigt eine Draufsicht auf die Rollsonotrode aus Fig. 2.
Fig. 4 zeigt eine Schnittansicht der Rollsonotrode aus Fig. 2 entlang der in Fig. 3 angegebenen Ebene A-A.
Fig. 5 zeigt eine vergrößerte Darstellung des in Fig. 4 angegebenen Bereichs B.
Fig. 6 zeigt eine alternative Ausgestaltung des in Fig. 4 angegebenen Bereichs B.
Fig. 7 zeigt eine perspektivische Ansicht einer Rollsonotrode gemäß einer alternativen Ausführungsform der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

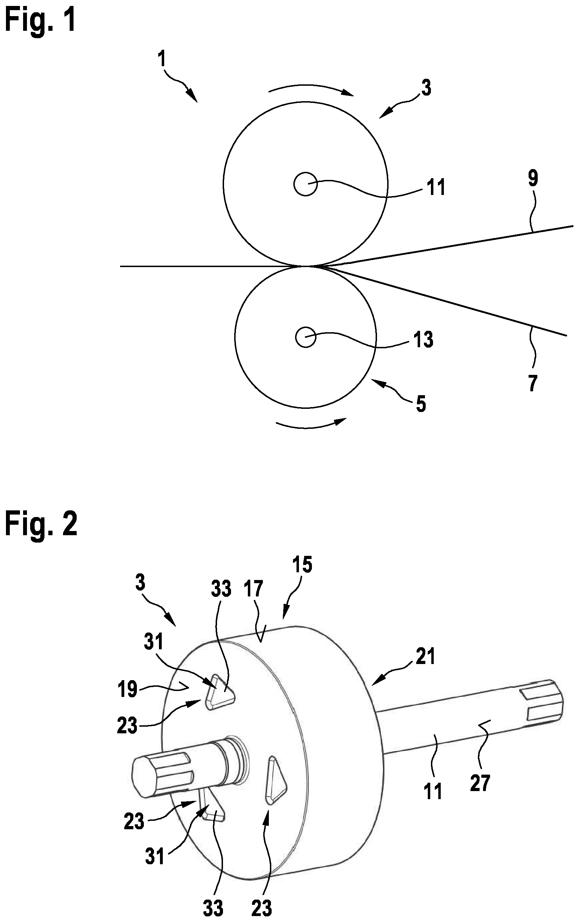

Fig. 1 zeigt in sehr stark schematisierter Veranschaulichung eine Ultraschallschweißanlage 1, mithilfe derer zwei Vlieslagen 7, 9 miteinander lokal verschweißt werden können. Die Ultraschallschweißanlage 1 umfasst eine Rollsonotrode 3 und eine Gegenrolle 5, welche um parallel zueinander verlaufende Rotationsachsen an jeweils zugehörigen Wellen 11, 13 in entgegengesetzten Richtungen gedreht werden können. Dabei schließen die Rollsonotrode 3 und die Gegenrolle 5 zwischen ihren Außenumfangsflächen einen schmalen Spalt ein, in den beide Vlieslagen 7, 9 eingezogen werden. Die Rollsonotrode 3 wird dabei von einem Schwingungsgeber (nicht dargestellt) derart mit Ultraschallschwingungen angeregt, dass sich in dieser eine Radialschwingung mit einer Ultraschall-Hauptfrequenz ausbildet.

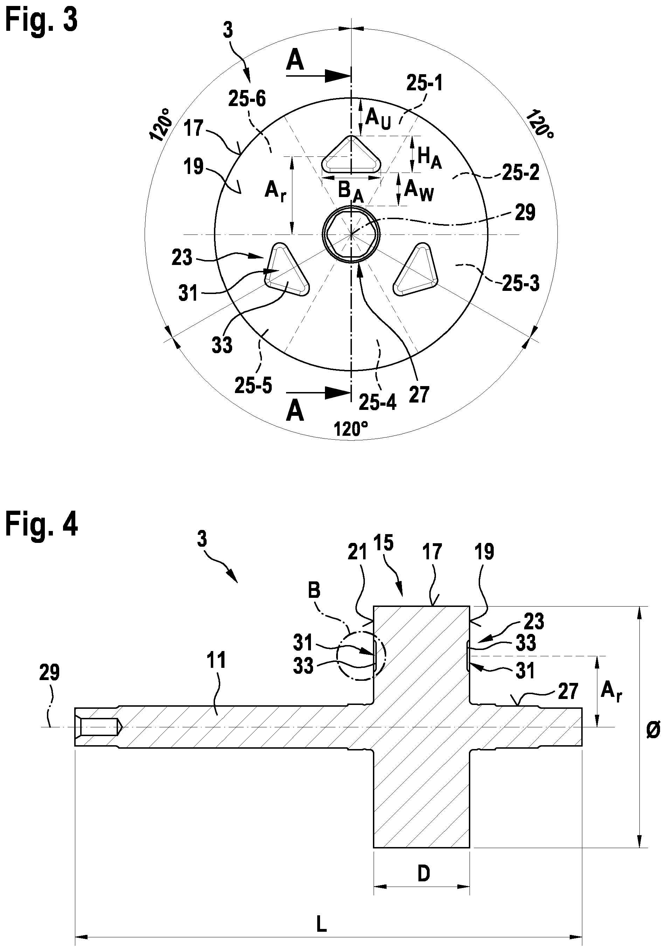

In den Fign. 2 - 5 wird eine Rollsonotrode 3 gemäß einer Ausführungsform der vorliegenden Erfindung veranschaulicht. Die Rollsonotrode 3 umfasst einen kreiszylinderförmigen Sonotrodenkörper 15. Der Sonotrodenkörper 15 weist eine kreiszylindrische Umfangsfläche 17, an einem vorderen Ende eine erste kreisringförmige Stirnfläche 19 und an einem hinteren Ende eine zweite kreisringförmige Stirnfläche 21 auf. Die Welle 11 erstreckt sich in axialer Richtung zentral durch den Sonotrodenkörper 15 hindurch und steht über beide Stirnflächen 19, 21 axial über.

Im dargestellten Beispiel sind an dem Sonotrodenkörper 15 drei dickenvariierte Bereiche 23 ausgebildet. Die dickenvariierten Bereiche 23 werden dabei dadurch erzeugt, dass sowohl an der ersten Stirnfläche 19 als auch an der zweiten Stirnfläche 21 jeweils ein vertiefter Bereich 31 in Form einer Ausnehmung 33 ausgebildet ist.

Die dickenvariierten Bereiche 23 sind dabei jeweils in einem anderen einer Mehrzahl von Kreissektoren 25 angeordnet, sodass beispielsweise ein Kreissektor 25-3, in dem ein dickenvariierter Bereich 23 ausgebildet ist, beiderseits von Kreissektoren 25-2, 25-4 benachbart wird, in dem keine solchen dickenvariierten Bereiche 23 ausgebildet sind.

Die dickenvariierten Bereiche 23 bzw. die Kreissektoren 25-1, 25-3, 25-5, in denen diese ausgebildet sind, sind dabei in Umfangsrichtung äquidistant zueinander angeordnet, d.h. sie sind mit einem Winkelversatz von jeweils 120° zueinander versetzt.

Die zur Bildung der vertieften Bereiche 31 eingebrachten Ausnehmungen 33 sind dabei flächig und mit geringer Tiefe ausgestaltet. Eine Tiefe T_{A} der Ausnehmung 33 kann dabei als ΔD/2 angenommen werden und kann beispielsweise 1,5 mm betragen. Die Tiefe T_{A} kann dabei bei den Ausnehmungen 33 an allen dickenvariierten Bereichen 23 gleich oder ähnlich sein, sie kann jedoch prinzipiell bei den verschiedenen dickenvariierten Bereichen 23 auch unterschiedlich eingestellt werden. Unter ΔD kann hierbei ein Dickenunterschied verstanden werden, mit dem sich eine Dicke des Sonotrodenkörpers im jeweiligen dickenvariierten Bereich von einer Dicke des Sonotrodenkörpers in einem angrenzenden Kreissektor ohne eine solche Ausnehmung 33 unterscheidet. Der Dickenunterschied ΔD entspricht hierbei der Summe der Tiefen T_{A} der beiden zur Bildung des dickenvariierten Bereichs 23 eingesetzten Ausnehmungen 33 an den entgegengesetzten Stirnflächen 19, 21 des Sonotrodenkörpers 15. Bei einer angenommenen durchschnittlichen Dicke D des Sonotrodenkörpers von ca. 45 mm entspricht dieser Dickenunterschied ΔD daher 3 mm und somit weniger als 10 % der durchschnittlichen Dicke D.

Eine Flächenform der Ausnehmungen 33 ist im dargestellten Beispiel näherungsweise dreieckig. Sie kann jedoch jede beliebige andere Flächenform annehmen, beispielsweise rund, viereckig, polygonal, etc. Die mehreren Ausnehmungen 33 können alle eine gleiche oder ähnliche Flächenform aufweisen, sie können sich diesbezüglich jedoch auch voneinander unterscheiden. Abmessungen der Ausnehmung 33 parallel zu der zugehörigen Stirnfläche 19, 21, das heißt eine Breite B_{A} der Ausnehmung 33 in Umfangsrichtung sowie eine Höhe H_{A} der Ausnehmung 33 in radialer Richtung der Rollsonotrode sind dabei jeweils erheblich größer als die Tiefe T_{A} der Ausnehmung 33, beispielsweise um einen Faktor von wenigstens 5, wenigstens 10 oder sogar wenigstens 20.

Der dickenvariierte Bereich 23 bzw. die zu dessen Bildung vorgesehene Ausnehmung 33 befindet sich in radialer Richtung zwischen einem Außenumfang 27 der Welle 11 und der Umfangsfläche des Sonotrodenkörpers 15 und ist zu diesen beiden vorzugsweise jeweils beabstandet. Ein radialer Abstand Aᵣ des dickenvariierten Bereichs 23 von einer Mittelachse 29 des Sonotrodenkörpers wird dabei als Abstand zwischen dieser Mittelachse 29 und einem geometrischen Zentrum der zugehörigen Ausnehmung 33 angenommen. Eine radial innenliegende Kante der Ausnehmung 33 ist dabei mit einem Abstand A_{W} in radialer Richtung von dem Außenumfang 27 der Welle 11 beabstandet. Eine radial außenliegende Kante der Ausnehmung 33 ist mit einem Abstand A_{U} von der Umfangsfläche 17 des Sonotrodenkörpers 15 beabstandet. Beide Abstände A_{W}, A_{U} können prinzipiell beliebig gewählt werden. Beispielsweise kann jeder dieser beiden Abstände größer als 1 mm oder größer als 5 mm sein. Die beiden Abstände können gleich oder in etwa gleich sein, sodass sich die Ausnehmung 33 etwa mittig zwischen dem Außenumfang 27 der Welle 11 und der Umfangsfläche 17 des Sonotrodenkörpers 15 befindet. Die Ausnehmung 33 kann jedoch auch außermittig, d.h. beispielsweise näher zu der Umfangsfläche 17 oder näher zu dem Außenumfang 27 der Welle 11, angeordnet sein. Ein Durchmesser ø des Sonotrodenkörpers kann in einem Bereich von typischerweise 50-200 mm liegen; beispielsweise kann er 115mm ± 5mm betragen. Eine Länge L der Welle 11 kann beispielsweise 100 - 300 mm betragen.

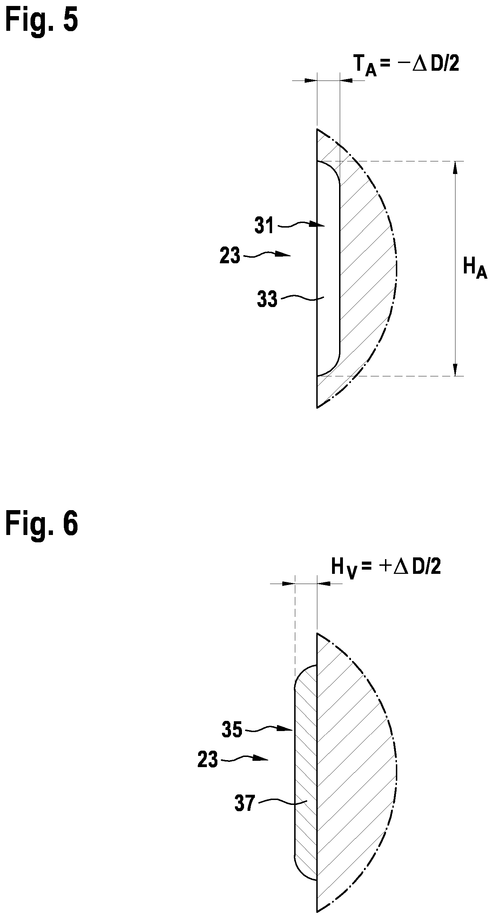

In Fig. 6 wird eine alternative Möglichkeit einer Ausgestaltung eines dickenvariierten Bereichs 23 veranschaulicht. In diesem Fall wird anstatt eines vertieften Bereichs 31 ein lokal verdickter Bereich 35 erzeugt, um die Dicke des Sonotrodenkörpers 15 lokal zu vergrößern. In dem verdickten Bereich 35 wird eine Verdickung 37 ausgebildet, beispielsweise indem Material lokal auf die Stirnfläche 19, 21 aufgebracht wird. Die Verdickung 37 kann dabei eine Höhe H_{V} von beispielsweise 1 - 3 mm, insbesondere etwa 1,5 mm, aufweisen und hierbei wieder einer Hälfte des insgesamt an dem dickenvariierten Bereich 23 auszubildenden Dickenunterschieds ΔD ausmachen. Sonstige Abmessungen der Verdickung 37 sowie deren räumliche Anordnung an der zugehörigen Stirnfläche 19, 21 des Sonotrodenkörpers 15 können ähnlich wie bei der weiter oben beschriebenen Ausnehmung 33 sein.

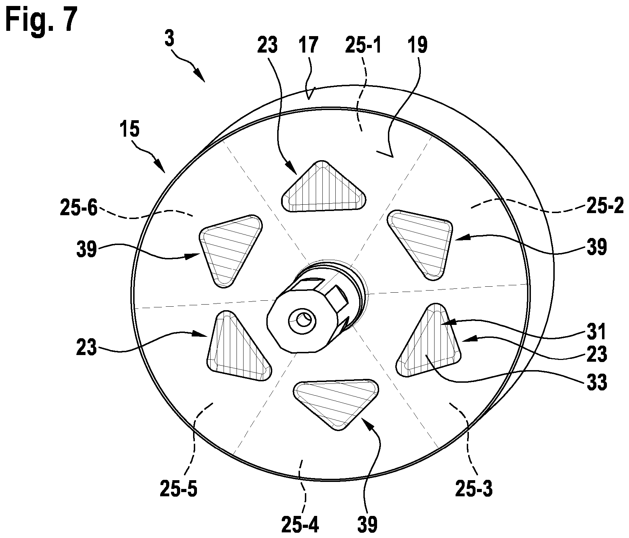

Fig. 7 veranschaulicht eine weitere alternative Ausführungsform einer Rollsonotrode 3.

In diesem Fall sind an dem Sonotrodenkörper 15 an beiden entgegengesetzten Stirnflächen 19, 21 zusätzlich zu den drei ersten dickenvariierten Bereichen 23, wie sie bei der vorangehend beschriebenen Ausführungsform in den Kreissektoren 25-1, 25-3, 25-5 bereits vorgesehen wurden, drei weitere dickenvariierte Bereiche 39 vorgesehen. Diese sind jeweils in anderen Kreissektoren 25-2, 25-4, 25-6 ausgebildet. Dementsprechend wird jeder der anderen dickenvariierten Bereiche 23 in Umfangsrichtung an beiden entgegengesetzten Seiten von jeweils einem der anderen dickenvariierten Bereiche 39 benachbart.

Die ersten dickenvariierten Bereiche 23 unterscheiden sich dabei hinsichtlich des darin vorliegenden Dickenunterschieds ΔD von den weiteren dickenvariierten Bereichen 39. Beispielsweise kann die Tiefe T_{A} von Ausnehmungen 33, welche die ersten dickenvariierten Bereiche 23 bilden, anders und insbesondere größer sein als die entsprechende Tiefe T_{A} von Ausnehmungen 33, welche die weiteren dickenvariierten Bereiche 39 bilden.

Ansonsten können die ersten dickenvariierten Bereiche 23 und die weiteren dickenvariierten Bereiche 39 jeweils ähnliche geometrische Ausgestaltungen aufweisen, d.h. beispielsweise eine gleiche oder ähnliche Form, gleiche oder ähnliche Fläche, etc. besitzen, oder sich hinsichtlich ihrer geometrischen Ausgestaltungen voneinander unterscheiden. Auch eine radialer Abstand Aᵣ zu der axialen Mittelachse 29 kann bei den ersten und den weiteren dickenvariierten Bereichen 23, 39 jeweils gleich sein oder unterschiedlich gewählt sein.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Ultraschallschweißanlage
- 3: Rollsonotrode
- 5: Gegenrolle
- 7: Vlieslage
- 9: Vlieslage
- 11: Welle
- 13: Welle
- 15: Sonotrodenkörper
- 17: Umfangsfläche
- 19: erste Stirnfläche
- 21: zweite Stirnfläche
- 23: dickenvariierter Bereich
- 25: Kreissektor
- 27: Außenumfang der Welle
- 29: axiale Mittelachse
- 31: vertiefter Bereich
- 33: Ausnehmung
- 35: verdickter Bereich
- 37: Verdickung
- 39: weiterer dickenvariierter Bereich
- D: Dicke
- ΔD: Dickenunterschied
- T_{A}: Tiefe der Ausnehmung
- B_{A}: Breite der Ausnehmung
- H_{V}: Höhe der Verdickung
- Aᵣ: radialer Abstand
- A_{U}: Abstand zum Außenumfang
- A_{W}: radialer Abstand zur Welle
- ø: Durchmesser des Sonotrodenkörper
- L: Länge der Welle

## Patentansprüche

1. Rollsonotrode (3) für eine Ultraschallschweißanlage (1),
wobei die Rollsonotrode (3) einen kreiszylinderförmigen Sonotrodenkörper (15) mit einer kreiszylindrischen Umfangsfläche (17) und zwei entgegengesetzten kreisringförmigen Stirnflächen (19, 21) aufweist,
wobei der Sonotrodenkörper (15) zumindest einen dickenvariierten Bereich (23) aufweist, der bezogen auf eine der Stirnflächen (19, 21) in einem Kreissektor (25) in einem radialen Abstand (Aᵣ) zu einer axialen Mittelachse (29) des Sonotrodenkörpers (15) angeordnet ist und innerhalb dessen eine Dicke des Sonotrodenkörpers (15) in axialer Richtung von einer Dicke des Sonotrodenkörpers (15) in axialer Richtung in einem in Umfangsrichtung angrenzenden Kreissektor (25) beim gleichen radialen Abstand (Aᵣ) zu der axialen Mittelachse (29) um einen Dickenunterschied (ΔD) verschieden ist.

2. Rollsonotrode nach Anspruch 1,
wobei der zumindest eine dickenvariierte Bereich (23) mittels eines lokal vertieften Bereichs (31) gebildet ist, der durch eine Ausnehmung (33) in Axialrichtung an zumindest einer der Stirnflächen (19, 21) ausgebildet ist, oder
wobei der zumindest eine dickenvariierte Bereich (23) mittels eines lokal verdickten Bereichs (35) gebildet ist, der durch eine Verdickung (37) in Axialrichtung an zumindest einer der Stirnflächen (19, 21) ausgebildet ist.

3. Rollsonotrode nach Anspruch 2,
wobei an beiden Stirnflächen (19, 21) jeweils mindestens eine Ausnehmung (33) und/oder jeweils mindestens eine Verdickung (37) ausgebildet ist.

4. Rollsonotrode nach Anspruch 3,
wobei die Ausnehmungen (33) und/oder Verdickungen (37) an den entgegengesetzten Stirnflächen (19, 21) in einander in Axialrichtung gesehen überlappenden Bereichen ausgebildet sind.

5. Rollsonotrode nach einem der vorangehenden Ansprüche,
wobei der Dickenunterschied (ΔD) höchstens 20 % und mindestens 0,2% einer durchschnittlichen Dicke (D) des Sonotrodenkörpers (15) aufweist.

6. Rollsonotrode nach einem der vorangehenden Ansprüche,
wobei der Dickenunterschied (ΔD) höchstens 20 mm und mindestens 0,1 mm aufweist.

7. Rollsonotrode nach einem der vorangehenden Ansprüche,
wobei der Sonotrodenkörper (15) zumindest drei dickenvariierte Bereiche (23) verteilt auf zumindest drei verschiedene Kreissektoren (25) aufweist.

8. Rollsonotrode nach Anspruch 7,
wobei die dickenvariierten Bereiche (23) in Umfangsrichtung äquidistant zueinander angeordnet sind.

9. Rollsonotrode nach einem der vorangehenden Ansprüche,
wobei die Rollsonotrode (3) zumindest sechs dickenvariierte Bereiche (23, 39) verteilt auf zumindest sechs verschiedene Kreissektoren (25) aufweist.

10. Rollsonotrode nach Anspruch 9,
wobei dickenvariierte Bereiche (23, 39) von in Umfangsrichtung zueinander nächstbenachbarten Kreissektoren (25) voneinander verschiedene Dickenunterschiede (ΔD) aufweisen.

11. Ultraschallschweißanlage (1) aufweisend eine Rollsonotrode (3) gemäß einem der vorangehenden Ansprüche.

12. Verfahren zum Fertigen einer Rollsonotrode (3) für eine Ultraschallschweißanlage (1),
wobei das Verfahren aufweist:
Bereitstellen eines kreiszylinderförmigen Sonotrodenkörpers (15) mit einer kreiszylindrischen Umfangsfläche (17) und zwei entgegengesetzten kreisringförmigen Stirnflächen (19, 21),
Ausbilden zumindest eines dickenvariierten Bereichs (23) an dem Sonotrodenkörper (15), wobei der dickenvariierte Bereich (23) bezogen auf eine der Stirnflächen (19, 21) in einem Kreissektor (25) in einem radialen Abstand (Aᵣ) zu einer axialen Mittelachse (29) des Sonotrodenkörpers (15) angeordnet ist und innerhalb des dickenvariierten Bereichs (23) eine Dicke des Sonotrodenkörpers (15) in axialer Richtung sich von einer Dicke des Sonotrodenkörpers (15) in axialer Richtung in einem in Umfangsrichtung angrenzenden Kreissektor (25) beim gleichen radialen Abstand (Aᵣ) zu der axialen Mittelachse (29) um einen Dickenunterschied verschieden ist.

13. Verfahren nach Anspruch 12,
ferner umfassend:
Ermitteln einer Amplitudenverteilung einer in dem Sonotrodenkörper (15) angeregten Ultraschallschwingung entlang der Umfangsfläche (17) des Sonotrodenkörpers (15), wobei der mindestens eine dickenvariierten Bereich (23) an einer Position ausgebildet wird, an der eine an der Position ermittelte Amplitude sich maximal von einer durchschnittlichen Amplitude der angeregten Ultraschallschwingung entlang der Umfangsfläche (17) des Sonotrodenkörpers (15) unterscheidet.

14. Verfahren nach einem der Ansprüche 12 und 13,
wobei der dickenvariierte Bereich (23) als lokal vertiefter Bereich (31) durch lokales Entfernen von Material von dem Sonotrodenkörper (15) an zumindest einer der Stirnflächen (19, 21) ausgebildet wird, oder
wobei der dickenvariierte Bereich (23) als lokal verdickter Bereich (35) durch lokales Aufbringen von Material von den Sonotrodenkörper (15) an zumindest einer der Stirnflächen (19, 21) ausgebildet wird.

15. Verfahren nach einem der Ansprüche 12 bis 14,
wobei an dem Sonotrodenkörper (15) in einem ersten Fertigungsschritt zumindest ein dickenvariierter Bereich (23) in einem Kreissektor (25-1, 25-3, 25-5) ausgebildet wird, vorzugsweise zumindest drei dickenvariierte Bereiche (23) verteilt auf zumindest drei verschiedene Kreissektoren (25-1, 25-3, 25-5) ausgebildet werden,
wobei anschließend eine Amplitudenverteilung einer in dem Sonotrodenkörper (15) angeregten Ultraschallschwingung entlang der Umfangsfläche (17) des Sonotrodenkörpers (15) ermittelt wird, und
wobei nachfolgend in einem weiteren Fertigungsschritt abhängig von der ermittelten Amplitudenverteilung zumindest ein weiterer dickenvariierter Bereich (39) in einem anderen Kreissektor (25-2, 25-4, 25-6) ausgebildet wird, vorzugsweise zumindest drei weitere dickenvariierte Bereiche (39) verteilt auf zumindest drei verschiedene andere Kreissektoren (25-2, 25-4, 25-6) ausgebildet werden.
